# FASCICULE DE BREVET EUROPEEN

(11) **EP 3 722 891 B1**
(45) Date de publication et mention de la délivrance du brevet: **09.02.2022**
(21) Numéro de dépôt: 19168876.1
(22) Date de dépôt: 12.04.2019
(51) Int. Cl.: G04C 3/16, G04C 15/00, H02P 21/18

(54) **PROCEDÉ ET SYSTÈME DE DÉTERMINATION D'UNE ERREUR ET DE CORRECTION DE LA POSITION ANGULAIRE D'UN MOTEUR A ROTATION CONTINUE**
VERFAHREN UND SYSTEM ZUR BESTIMMUNG EINES FEHLERS UND DER KORREKTUR DER WINKELPOSITION EINES KONTINUIERLICH DREHENDEN MOTORS
METHODS AND SYSTEM FOR DETERMINING AN ERROR AND FOR CORRECTING THE ANGULAR POSITION OF AN ENGINE WITH CONTINUOUS ROTATION

(43) Date de publication de la demande: 14.10.2020
(73) Titulaire: The Swatch Group Research and Development Ltd, 2074 Marin (CH)
(72) Inventeur: HOOVER, David, 2034 Peseux (CH)
(74) Mandataire: ICB SA

(56) Documents cités:
- WO-A1-2013/132249
- WO-A1-2018/024963
- US-A- 6 069 467

## Description

### Domaine de l'invention

L'invention concerne un procédé de détermination d'une erreur de mesure de la position angulaire d'un moteur à rotation continue ayant une ou plusieurs phases, notamment un moteur de pièce d'horlogerie.

L'invention concerne aussi un procédé de correction de la mesure de la position angulaire d'un moteur à rotation continue ayant une ou plusieurs phases.

L'invention concerne également un système de détermination d'une erreur et de correction de la mesure de la position angulaire d'un moteur à rotation continue ayant une ou plusieurs phases, pour la mise en œuvre des procédés.

L'invention concerne encore une pièce d'horlogerie comprenant un tel système de détermination d'une erreur et de correction de la mesure de la position angulaire d'un moteur à rotation continue ayant une ou plusieurs phases.

### Arrière-plan de l'invention

Dans le domaine des moteurs électriques, en particulier pour les pièces d'horlogerie, les moteurs comprennent un stator muni de bobines et d'un rotor muni d'aimants. Le courant électrique est fourni par une source électrique dans les bobines pour générer un champ magnétique qui actionne la rotation du rotor en agissant sur les aimants. De tels moteurs sont par exemple utilisés dans les pièces d'horlogerie pour actionner le mécanisme entraînant les aiguilles indiquant l'heure sur un cadran, par exemple celui d'une montre. Généralement, on utilise des moteurs à rotation séquentielle, appelés « moteurs pas-à-pas », pour contrôler le déplacement des aiguilles, notamment l'aiguille des secondes qui avance par à-coups.

Cependant, il est également envisageable d'utiliser des moteurs à rotation continue, c'est-à-dire des moteurs qui tournent sans arrêt. Ces moteurs sont actionnés continûment, de préférence à vitesse constante, par exemple pour qu'une aiguille des secondes progresse sur le cadran sans à-coups.

Il existe, en particulier, des moteurs à rotation continue à une ou plusieurs phases, le nombre de phases étant défini par le nombre d'aimants et de bobines, ainsi que par leur disposition géométrique sur le stator et le rotor. Pour chaque phase, la source électrique produit un courant avec une phase correspondante pour actionner le moteur. L'induction des bobines produit une force contre-électromotrice corrélée avec chaque phase.

Il est connu de mesurer les forces contre-électromotrice pour déduire la position angulaire du moteur à chaque instant. En particulier, on mesure la vitesse de rotation du moteur en détectant les changements de signes des forces contre-électromotrices de chaque phase, et en intégrant la vitesse pour déduire la position angulaire. Pour déterminer la position angulaire d'un moteur, on compte le nombre d'instants détectés, sachant qu'il y a un nombre défini d'instants détectés par tour de moteur. Ainsi, on peut déduire la position angulaire cumulée exacte, même après un grand nombre de tours de 360° chacun. Cependant, lorsque le moteur subit un disfonctionnement, qui provoque un ralentissement ou un arrêt momentané du moteur, voire qui le fait tourner temporairement dans le sens inverse de sa progression, la tension devient trop faible, de sorte qu'il n'est plus possible de détecter la valeur de la force contre-électromotrice et d'en déduire la position angulaire du moteur. Un tel disfonctionnement peut se produire, par exemple, suite à un mouvement brutal du poignet ou du bras dans le cas d'une montre à bracelet. Lorsque le moteur reprend sa course, le comptage est faussé, et par conséquent la position angulaire déduite n'est plus correcte.

WO2013/132249 A1 divulgue une méthode pour déterminer la position du rotor d'un moteur à rotation continue sans utiliser d'un capteur de rotation spécifique. L'erreur de mesure de la position est corrigée en corrigeant pour une première et deuxième vitesse du moteur.

### Résumé de l'invention

L'invention a donc pour but de pallier les inconvénients de l'état de la technique susmentionné en proposant un procédé de détermination d'une erreur de mesure de la position angulaire d'un moteur à rotation continue ayant une ou plusieurs phases, le moteur comprenant un rotor apte à être mis en rotation, procédé dans lequel il est possible de déterminer la position angulaire du moteur à la suite d'un disfonctionnement, tel un ralentissement, un arrêt, voire un changement de sens du moteur.

A cet effet, l'invention concerne un procédé de détermination d'une erreur de mesure de la position angulaire d'un moteur à rotation continue selon la revendication 1.

Ainsi, en mesurant plusieurs intervalles de temps entre des instants détectés et en le comparant à des intervalles de temps de références spécifiques au moteur, on peut déterminer s'il y a une erreur de mesure, et donc savoir quelle est la position angulaire du moteur. En effet, bien que la fabrication d'un moteur soit très précise, un moteur ne peut être conçu de manière absolument parfaite. La forme des aimants et des bobines, ainsi que leurs dispositions sur le rotor et le stator varient légèrement selon les moteurs. Ces petites imperfections du moteur ont un impact sur la mesure des forces contre-électromotrices des différentes phases du moteur. Par conséquent, les forces contre-électromotrices, qui présentent chacune une forme sinusoïdale déphasées les unes par rapport aux autres phases, peuvent avoir en plus un décalage dû à ces imperfections.

Ces décalages induisent un manque de régularité dans les intervalles de temps entre passages successifs par la valeur nulle des forces contre-électromotrices. Ainsi, on peut caractériser les différents intervalles de temps et déterminer à quelle position angulaire correspondent les instants détectés.

Dans le cas d'un disfonctionnement du moteur d'une montre, qui provoque une erreur de mesure de la valeur de l'angle, le procédé permet de déterminer cette erreur et de retrouver la position angulaire réelle du moteur.

Grâce à ce procédé, il suffit de détecter chaque instant où la valeur d'une des forces contre-électromotrices est nulle pour pouvoir déterminer une erreur sur la position angulaire du moteur. On a de la sorte un procédé fiable et simple à mettre en œuvre techniquement, qui ne demande pas une quantité d'énergie importante.

Selon un mode de réalisation particulier de l'invention, on détermine l'erreur de mesure de la position angulaire en comptant le nombre d'instants d'avance ou de retard entre les intervalles mesurés et les intervalles de référence attendus.

Selon un mode de réalisation particulier de l'invention, les intervalles de temps sont mesurés entre deux instants détectés successifs.

Selon un mode de réalisation particulier de l'invention, le même intervalle de temps est mesuré sur plusieurs tours de moteurs pour obtenir une valeur moyenne.

Selon un mode de réalisation particulier de l'invention, des intervalles de temps sont mesurés entre tous les instants détectés d'un tour de moteur, pour obtenir une série d'intervalles de temps.

Selon un mode de réalisation particulier de l'invention, la série d'intervalles de temps est comparée à une série d'intervalles de temps de référence d'un tour de moteur de référence pour déterminer l'erreur de mesure.

Selon un mode de réalisation particulier de l'invention, on détermine l'erreur de mesure en comptant le nombre d'instants d'avance ou de retard de la série d'intervalles de temps par rapport à la série d'intervalles de temps de référence.

Selon un mode de réalisation particulier de l'invention, le procédé comprend une série d'étapes préalables de définition des intervalles de références, le moteur tournant à vitesse constante, la série d'étapes consistant à :
- détecter chaque instant où la valeur d'une force contre-électromotrice est nulle pour un tour de référence du moteur,
- enregistrer un temps correspondant à chaque instant détecté,
- mesurer des intervalles de temps entre les instants détectés successifs pour un tour de moteur, et
- enregistrer les intervalles de temps mesurés comme des intervalles de référence pour un tour de référence du moteur.

Selon un mode de réalisation particulier de l'invention, on détecte les instants sur plusieurs tours du moteur afin de calculer une valeur moyenne pour chaque intervalle de temps de référence du tour de référence.

Selon un mode de réalisation particulier de l'invention, la série d'étapes préalables est répétée régulièrement pour actualiser les intervalles de référence.

L'invention concerne également une utilisation du procédé de détermination décrit précédemment dans un procédé de correction de la mesure de la position angulaire d'un moteur à rotation continue ayant une ou plusieurs phases, le moteur comprenant un rotor mis en rotation, le procédé comprenant les étapes suivantes :
- détecter chaque instant où la valeur d'une force contre-électromotrice est nulle,
- compter le nombre d'instants détectés pour déduire une position angulaire du moteur,
- effectuer une série d'étapes préalables de définition d'intervalles de références tel que décrit précédemment,
- détecter une anomalie,
- déterminer une erreur de mesure de la position angulaire du moteur avec le procédé tel que décrit précédemment, et
- corriger la mesure de la position angulaire du moteur.

Selon un mode de réalisation particulier de l'invention, le moteur est arrêté dès qu'une anomalie est détectée, puis il est redémarré avant de déterminer une erreur de mesure de sa position angulaire. L'anomalie peut être un disfonctionnement, voire un arrêt inopiné du moteur. L'anomalie peut aussi être un arrêt, puis un redémarrage délibéré du moteur, qui est commandé par une action spécifique, cet arrêt pouvant induire une erreur de comptage.

Selon un mode de réalisation particulier de l'invention, une anomalie est détectée lorsqu'on ne détecte plus d'instant, ou lorsqu'un instant détecté ne vient pas d'une phase correspondant à un ordre prévu.

L'invention concerne aussi un système de détermination d'une erreur et de correction de la mesure de la position angulaire d'un moteur à rotation continue selon la revendication 14.

Selon un mode de réalisation particulier de l'invention, le système comprend une unité de correction de la mesure de la position angulaire, l'unité de correction étant configurée pour compter le nombre d'instants détectés, pour déduire une position angulaire du moteur, pour détecter une anomalie, et pour corriger la mesure de la position angulaire du moteur.

L'invention concerne encore une pièce d'horlogerie selon la revendication 16.

### Brève description des dessins

Les buts, avantages et caractéristiques des procédés et du système de détermination et de correction selon l'invention apparaîtront mieux dans la description suivante d'au moins une forme d'exécution non limitative illustrée par les dessins sur lesquels :
La figure 1 est un schéma synoptique d'un procédé de détermination d'une erreur de mesure de la position angulaire d'un moteur ayant une ou plusieurs phases.
La figure 2 est un graphique représentant les courbes de phases d'un moteur à trois phases.
La figure 3 est un schéma synoptique de la série d'étapes préalable de définition des intervalles de références.
La figure 4 est un tableau représentant les valeurs des intervalles de temps mesurés entre les instants détectés successifs d'un tour de moteur.
La figure 5 est un schéma synoptique d'un procédé de correction de la mesure de la position angulaire d'un moteur ayant une ou plusieurs phases.
La figure 6 est un graphique représentant les intervalles mesurés suite à un disfonctionnement par rapport à des intervalles de référence d'un moteur à rotation continue à trois phases.
La figure 7 est une représentation schématique d'un système de détermination d'une erreur et de correction de la mesure de la position angulaire selon l'invention.

### Description détaillée de l'invention

Le procédé de détermination est prévu pour permettre de déterminer une erreur de mesure de la position angulaire d'un moteur continu ayant une ou plusieurs phases. Il s'agit par exemple d'un moteur de pièce d'horlogerie, telle une montre à bracelet. L'invention peut cependant être élargie à tout moteur à rotation continue. On entend par le terme « rotation continue », le fait que le moteur tourne sans s'arrêter dans son mode de fonctionnement normal, avec généralement une vitesse de rotation constante, par opposition à un moteur, dit « pas-à-pas », qui effectue des petites rotations successives entrecoupées par un arrêt de la rotation.

Un tel moteur comprend généralement un stator muni de plusieurs bobines, par exemple trois bobines, réparties angulairement sur le stator, et un rotor muni de plusieurs aimants, par exemple six aimants, répartis angulairement de manière uniforme sur le rotor. Le rotor est configuré pour tourner sur, ou à l'intérieur, du stator grâce à une source électrique, par exemple un générateur, qui fournit le courant nécessaire à chacune des phases du moteur. La position angulaire du moteur est définie dans la demande comme la position du rotor par rapport au stator.

Le moteur selon l'invention fonctionne avec une ou plusieurs phases, le nombre de phases étant défini par le nombre d'aimants du rotor et de bobines du stator, ainsi que de leur disposition géométrique.

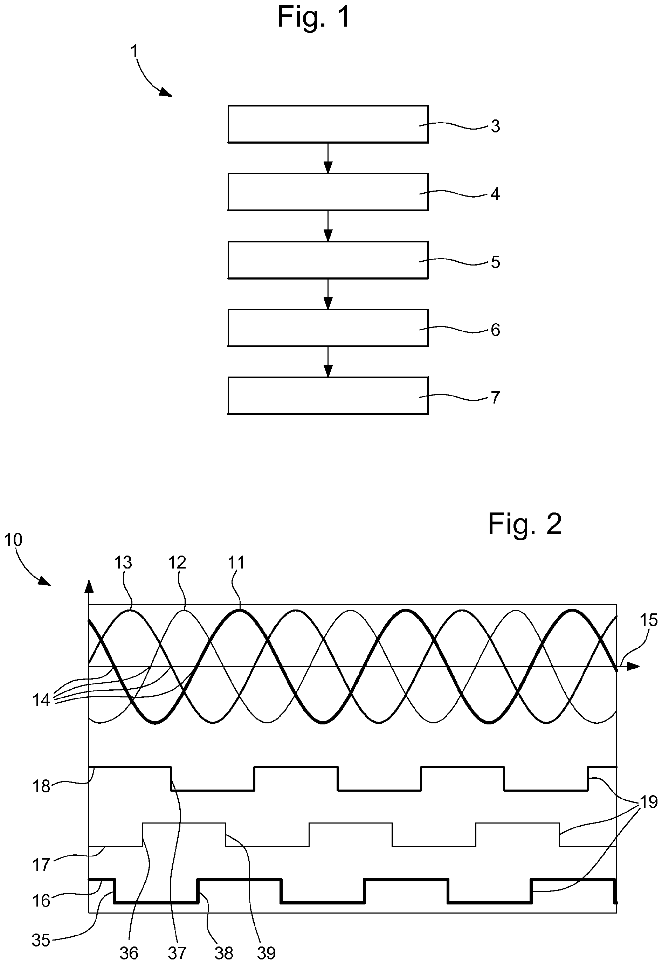

Le procédé de détermination 1, représenté sur la figure 1, comprend une première étape de détection 3, dans laquelle on détecte chaque instant où la valeur des forces contre-électromotrices est nulle sur chaque phase. Dès qu'une force contre-électromotrice passe par la valeur nulle, on détecte cet instant. Ainsi, on surveille les forces contre-électromotrices des phases du moteur, en connectant par exemple un composant de mesure sur chaque bobine du stator. Chaque phase a une force contre-électromotrice, dont la valeur décrit une courbe sinusoïdale périodique passant régulièrement par la valeur zéro. Cette étape 3 est effectuée quelle que soit la phase, les instants détectés pouvant être de la même phase ou de phases différentes. A cette fin, on détecte, de préférence, le changement de signe des forces contre-électromotrices pour déterminer le moment où la phase passe par zéro. Ainsi, dès qu'on mesure un changement de signe d'une valeur, on déduit que la valeur de la force contre-électromotrice est passée par zéro.

Dans une deuxième étape d'enregistrement 4, on enregistre un temps correspondant à chaque instant détecté. Pour cela, on mesure le temps courant pendant le fonctionnement du moteur. Dès que l'une des phases passe par zéro, on enregistre la valeur du temps courant correspondant à l'instant détecté. Ainsi, on enregistre une série de temps pour une suite de détections.

L'étape suivante, la troisième, est une étape de mesure 5 de plusieurs intervalles de temps entre deux instants détectés d'un même tour de moteur. On choisit, de préférence, des instants détectés successifs, qu'ils soient de la même phase ou de phases différentes. Dans un fonctionnement normal d'un moteur à deux phases ou plus, deux instants successifs sont de deux phases différentes car les phases du moteur ont la même période et sont déphasées l'une par rapport à l'autre, de sorte qu'on détecte séquentiellement un instant de chacune des phases. On entend par plusieurs, un nombre au moins égal à deux intervalles, de préférence supérieur à deux ou trois.

Dans un mode de réalisation préféré, on mesure les intervalles de temps entre tous les instants détectés sur un tour de moteur. Ainsi, avec un grand nombre d'intervalles, on augmente la fiabilité de la détermination de l'erreur. Encore plus avantageusement, chaque intervalle de temps est mesuré sur plusieurs tours de moteurs pour obtenir une valeur moyenne.

Ensuite, on compare les intervalles de temps mesurés à des intervalles de temps de référence dans une quatrième étape de comparaison 6 pour déduire à quels intervalles de référence ils correspondent. Les intervalles de temps de référence sont caractéristiques de chaque moteur pour des instants d'un tour de moteur de référence. Autrement dit, chaque moteur a une suite d'intervalles de temps propres, qui est une sorte de signature du moteur. La manière dont les intervalles de temps de références sont définis est décrite plus bas dans la suite de la description. Un intervalle de temps mesuré est forcément très proche, voire identique à un intervalle de temps de référence, de sorte que l'on peut déduire à quel intervalle de temps de référence il correspond.

Dans le mode de réalisation préféré où l'on mesure tous les intervalles, on augmente la fiabilité du procédé en comparant une série d'intervalles successifs à une série d'intervalles de références successifs. En effet, si des intervalles de référence ont des valeurs proches, il est plus sûr de comparer une série d'intervalles pour observer la continuité des positions angulaires du moteur.

Enfin, dans une cinquième étape 7, on détermine une erreur de mesure de la position angulaire si l'intervalle mesuré ne correspond pas à un intervalle de référence attendu. Pour connaître la position angulaire du moteur, on compte généralement les instants détectés, sachant que le nombre d'instants détectés est constant pour un tour de moteur. On peut déduire la valeur de l'angle en fonction du nombre d'instants détectés pour un tour de 360° du moteur et des intervalles de référence mesurés. Ainsi, la valeur d'un angle *Ai* pour un instant détecté *i* est *Ai*= *360***i*/*N*, où *N* est le nombre d'instants détectés pour un tour. En fonction du nombre d'instants détectés, on déduit la position angulaire du moteur.

Dans un fonctionnement normal, on sait à quel intervalle de référence correspondent les instants détectés. Les instants détectés suivent l'ordre des intervalles de référence, de sorte que l'on peut déduire à quel intervalle de référence correspond chaque instant détecté. Cependant, suite à une anomalie, le comptage peut être faussé si des instants ne sont plus détectés, alors que le moteur a continué de tourner dans un sens ou dans l'autre. Par conséquent, les instants détectés suivants définissent des intervalles, qui sont décalés par rapport aux intervalles de référence attendus. Ainsi, les intervalles mesurés ne correspondant plus aux intervalles de référence attendus, mais à des intervalles de référence en avance ou en retard par rapport aux intervalles de référence attendus. Autrement dit, l'intervalle de référence attendu ne correspond pas à la position angulaire réelle du moteur. Il y a, par conséquent, une erreur de comptage d'instants induisant cette erreur de mesure de la position angulaire. Pour déterminer cette erreur, on compte le nombre d'instants d'avance ou de retard entre les intervalles mesurés et les intervalles de référence attendus. Ainsi, grâce à cette mesure, la mesure de la position angulaire pourra être corrigée par la suite.

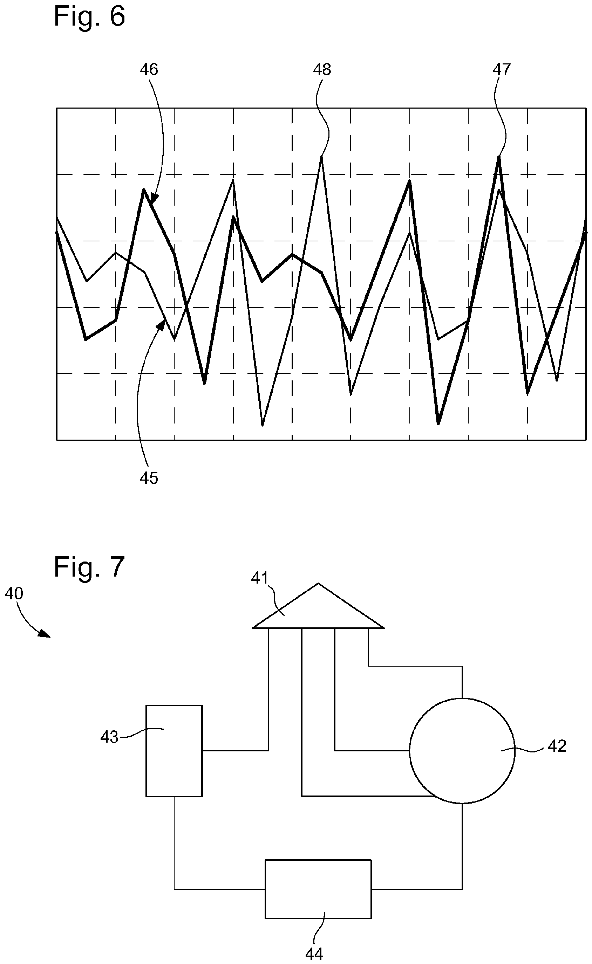

Dans le mode de réalisation préféré, la série d'intervalles de temps est comparée à une série d'intervalles de temps de référence sur un tour de moteur complet pour déterminer l'erreur de mesure. On détermine l'erreur de mesure en comptant le nombre d'instants d'avance ou de retard de la série d'intervalles de temps mesurés par rapport à la série d'intervalles de temps de référence dans l'ordre attendu. Pour cela, on effectue une inter-corrélation entre la série d'intervalles de temps mesurés et la série d'intervalles de temps de référence attendus. Pour mesurer le décalage entre les deux séries d'intervalle, on calcule l'index correspondant au maximum de l'inter-corrélation entre les deux fonctions représentant les deux séries. Un exemple de détermination d'erreur est décrit à la figure 6.

Sur la figure 2, sont représentées des exemples de courbes sinusoïdales de forces contre-électromotrices d'un moteur à trois phases. On distingue trois courbes 11, 12, 13 de même période décalées d'un même déphasage deux à deux, les trois courbes 11, 12, 13 étant superposées sur le même graphique, chaque courbe correspondant à une phase. On remarque que les courbes passent successivement par la valeur zéro 15 dans un ordre déterminé. Les courbes sont représentées pour un tour de moteur, c'est-à-dire pour un tour de rotor de 360°. Par conséquent, on comprend que l'on détecte dix-huit instants 14 pour un tour de moteur.

En-dessous des courbes sinusoïdales, on a représenté trois fonctions en créneaux l'une au-dessus de l'autre, chaque fonction créneau représentant les changements de signe de l'une des forces contre-électromotrices. La première fonction créneau 16 correspond à la première courbe sinusoïdale 11 d'une des trois phases, la deuxième fonction créneau 17 correspond à la deuxième courbe sinusoïdale 12, la troisième fonction créneau 18 correspond à la troisième courbe sinusoïdale 13.

Un instant détecté 19 correspond au moment du changement de la valeur du créneau, c'est-à-dire celui de la marche entre une valeur basse et haute ou haute et basse du créneau. Par exemple, on détecte un premier instant 35 sur la première fonction créneau 16, un deuxième instant 36 sur la deuxième fonction créneau 17, un troisième instant 37 sur la troisième fonction créneau 18, un quatrième instant 38 sur la première fonction créneau 16, un cinquième instant 39 sur la deuxième fonction créneau 17, et ainsi de suite. Les intervalles de temps sont mesurés entre deux instants successifs 35, 36, 37, 38, 39, qui appartiennent ici à deux fonctions créneaux différentes. Par exemple, un premier intervalle est mesuré entre le premier 35 et le deuxième instant 36, un deuxième intervalle est mesuré entre le deuxième 36 et le troisième instant 37, un troisième intervalle est mesuré entre le troisième 37 et le quatrième instant 38, et ainsi de suite. Ces intervalles peuvent ensuite être comparés aux intervalles de référence pour déterminer l'erreur de mesure.

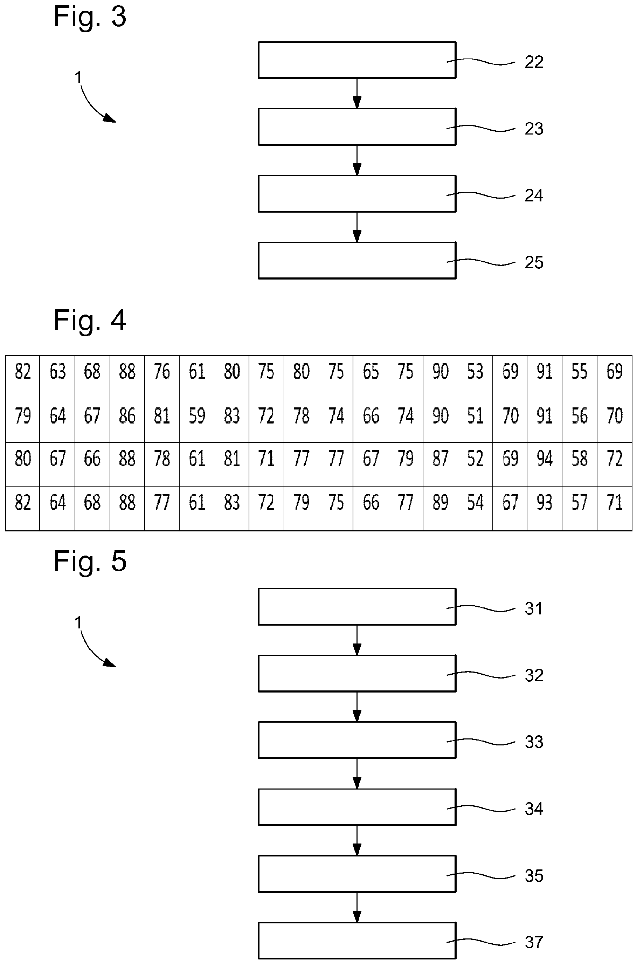

Pour définir les intervalles de références, le procédé de détermination comprend une série d'étapes préalables 20, représentées sur la figure 3. On suit les mêmes étapes que celles du procédé de détermination, mais il est, de préférence, exécuté dans des conditions favorables, dans lesquelles le moteur ne risque pas de subir une anomalie, lorsque le moteur tourne à vitesse constante, par exemple avant qu'une anomalie se produise. Les intervalles peuvent aussi être actualisés au cours de la vie de la pièce, par exemple en déclenchant la détermination des intervalles par le possesseur de la pièce, ou par un programme qui déclenche automatiquement la redéfinition des intervalles. Ainsi, la série d'étapes préalables est préférablement répétée régulièrement pour définir des intervalles de référence correspondant aux évolutions du moteur. En effet, un moteur peut légèrement changer dans son fonctionnement au cours de son utilisation. Il est donc nécessaire de recalculer les intervalles de références pour les adapter à cette évolution et favoriser une bonne fiabilité du procédé de détermination de la position angulaire.

Dans un mode de réalisation préféré, on définit les intervalles de référence pendant le fonctionnement du moteur, lorsque le moteur tourne au repos, c'est-à-dire pendant que le stator est immobile. En effet, si le moteur est secoué pendant la définition, les valeurs des intervalles de références seront faussées. Au repos, on s'assure que le moteur tourne à vitesse constante, sans subir d'accélérations non souhaitées. A cette fin, le moteur peut être doté d'un accéléromètre pour vérifier que le moteur est immobile. En variante, il est possible de comparer les valeurs enregistrées, par exemple pour chaque colonne du tableau de la figure 4, en vérifiant que la variance statistique de chaque colonne est minimale au cours du temps. Ainsi, on en déduit que le moteur fonctionne au repos. Lorsqu'une anomalie est détectée, les intervalles de référence sont les derniers intervalles de référence enregistrés.

Comme cela est représenté sur la figure 3, dans une première étape 22, on détecte chaque instant où la valeur d'une force contre-électromotrice est nulle, puis on enregistre un temps correspondant à chaque instant détecté 23, et on mesure les intervalles de temps entre les instants détectés successifs 24 d'un tour de moteur pour les enregistrer comme des intervalles de référence 25 pour un tour de référence.

Afin d'améliorer la fiabilité de la mesure des intervalles de référence, on détecte les instants sur plusieurs tours du moteur pour obtenir plusieurs valeurs d'un même intervalle. On calcule ensuite une valeur moyenne pour chaque intervalle de temps de référence du tour de référence du moteur. Le tableau de la figure 4 recense des valeurs d'intervalles mesurées pour plusieurs tours de moteur, ici quatre tours. Dans cet exemple, le moteur a dix-huit instants détectables par tour, donc dix-huit intervalles à mesurer. Autrement dit, les forces contre-électromotrices passent dix-huit fois par zéro en cumulé pour un tour de moteur. Chaque colonne du tableau correspond à un intervalle entre deux instants successifs d'un tour du moteur. Les valeurs, mesurées en millisecondes, d'une même colonne sont proches les unes des autres, car elles correspondent au même intervalle pour des tours différents du moteur.

Après plusieurs tours, on calcule pour chaque colonne une valeur moyenne, qui définit la valeur de l'intervalle de référence. Par exemple, le premier intervalle a une valeur moyenne de 80,75 ms, le deuxième intervalle de 64.5 ms, le troisième de 67,25 ms, le quatrième de 87, 5 ms, le cinquième de 78 ms, et le sixième de 60,5 ms, etc.... On remarque que les différences peuvent être assez importantes entre différents intervalles, par exemple de 17 ms entre la quatrième et la sixième valeur moyenne. Ces différences permettent de déterminer à quels intervalles de référence correspondent les intervalles mesurés. Dans le procédé de détermination, afin de définir la correspondance entre les intervalles de référence du tour de référence et les intervalles mesurés, on les compare pour trouver celui qui est le plus proche temporellement. Autrement dit, on compare la valeur numérique des intervalles mesurés aux intervalles de référence pour déterminer auxquels ils correspondent.

La figure 6 montre un exemple de décalage entre une série d'intervalles mesurés et une série d'intervalles de référence sur un tour de moteur, suite à une anomalie. La figure 6 est un graphique sur lequel on montre une fonction 45 représentant les intervalles mesurés pendant un tour de moteur et une fonction 46 représentant les intervalles de référence attendus. Dans cet exemple de moteur à trois phases, on détecte dix-huit instants où une phase passe par zéro pendant un tour de moteur. On a donc dix-huit valeurs d'intervalles de références consécutives en fonction de l'angle de rotation pour un tour de moteur. On observe que les deux fonctions 45, 46 sont semblables et que l'on peut déduire le retard ou l'avancement du moteur par rapport à la position angulaire de référence. En choisissant une valeur 47 d'un intervalle de référence, on remarque que la même valeur 48 est obtenue avec six instants de retard sur la fonction 45 des intervalles mesurés. Selon le procédé, on a déterminé une erreur de mesure de la position angulaire de six instants, de sorte qu'elle doit être corrigée de la valeur d'un angle correspondant à cette différence pour connaître la position angulaire réelle exacte du moteur. Pour calculer ce décalage, on effectue par exemple une inter-corrélation entre la série d'intervalles de temps mesurés et la série d'intervalles de temps de référence attendus. Pour mesurer le décalage entre les deux séries d'intervalles, on calcule l'index correspondant au maximum de l'inter-corrélation entre les deux fonctions 45, 46 représentant les deux séries.

L'invention se rapporte également à un procédé de correction 30 de la mesure de la position angulaire d'un moteur à rotation continue ayant une ou plusieurs phases, notamment un moteur de pièce d'horlogerie. Le moteur étant mis en rotation, le procédé comprend plusieurs étapes suivantes.

Une première étape consiste à détecter 31 chaque instant 14 où la valeur d'une des forces contre-électromotrices des phases du moteur est nulle, en connectant par exemple un composant de mesure sur chaque bobine du stator.

Dans une deuxième étape simultanée, on compte 32 le nombre d'instants détectés pour déduire une position angulaire du moteur. La position angulaire du moteur est un angle donné par le nombre de tours du moteur à partir d'une position initiale prédéfinie. La position initiale est par exemple la position du moteur lors de sa mise en marche. Ainsi, en comptant les instants, on déduit le nombre de tours qu'a fait le moteur sachant qu'un tour de moteur correspond à un nombre défini d'instants. Par exemple, si on a 18 passages par la valeur nulle des forces contre-électromotrice par tours, on peut déduire que le moteur a fait 10 tours, soit 3600 degrés, après avoir détecté 180 instants. Cette étape est importante, par exemple pour une application dans une pièce horlogère, car on peut déduire la position exacte des aiguilles entraînées par le moteur en connaissant la position angulaire du moteur depuis la position d'origine.

La troisième étape 33 consiste à effectuer une série d'étapes préalables de définition d'intervalles de références selon le procédé de détermination décrit précédemment.

Dans une quatrième étape, on détecter 33 si une anomalie se produit pendant le comptage. Une anomalie est par exemple détectée lorsqu'on ne détecte plus d'instant après un temps déterminé, ou lorsqu'un instant détecté ne vient pas d'une phase correspondant à un ordre prévu. Généralement, on détecte un instant sur une phase l'une après l'autre dans un ordre spécifique comme on l'a vu dans l'exemple de la figure 2. Par conséquent, dans le cas où deux instants successifs ne suivent pas cet ordre pour un moteur ayant deux phases ou plus, on en déduit qu'une anomalie s'est produite. Par exemple, si le moteur change de sens de rotation suite à un choc, l'instant détecté suivant sera détecté sur une autre phase que celle attendue.

Le moteur est arrêté dès qu'une anomalie est détectée 33, puis il est redémarré. En l'arrêtant au plus vite, on évite que l'anomalie ne s'aggrave, et que l'erreur sur la mesure de l'angle global augmente avec une différence d'angle qui risquerait de dépasser un demi-tour de retard ou d'avance. En effet, si la différence d'angle dépasse un demi-tour de moteur, on ne peut plus savoir si l'angle mesuré est en avance ou en retard par rapport à l'angle réel. Ensuite, le moteur est redémarré pour pouvoir déterminer sa position angulaire.

On peut aussi définir qu'une anomalie correspond à un arrêt et un redémarrage délibéré du moteur. Par exemple, lorsqu'on passe d'un affichage de l'heure à celui d'un chronomètre sur une montre. L'arrêt induit généralement une erreur de mesure de la position angulaire du moteur après le redémarrage. En effet, des instants ne sont pas détectables lorsque le moteur est en train de s'arrêter, puis de redémarrer.

On détermine 35 ensuite, dans une quatrième étape, une erreur de mesure de la position angulaire du moteur avec le procédé de détermination décrit précédemment.

Puis, la cinquième étape consiste à corriger 37 la mesure de la position angulaire du moteur, grâce à la mesure de l'erreur de la quatrième étape. En effet, il suffit d'ajouter ou retrancher l'angle correspondant au nombre d'instants de retard ou d'avance, à la position angulaire déduit à la deuxième étape. Ainsi, on connait la position réelle exacte du moteur.

Dans une application horlogère, on aura de la sorte une connaissance exacte de la position angulaire du moteur depuis sa mise en marche, et donc de la position des aiguilles et de l'heure affichée, même en cas d'anomalie du moteur. En outre, si l'heure affichée ne correspond pas à une valeur prédéfinie, on peut la rectifier en agissant sur le moteur. La rectification consiste ensuite à accélérer ou retarder le moteur pour que l'heure affichée corresponde à l'heure prédéfinie. La valeur prédéfinie est calculée en fonction de la position attendue d'un mouvement mécanique, notamment un mouvement mécanique de montre, le mouvement étant entrainé par ledit moteur. La valeur prédéfinie est par exemple calculée par un module comprenant un oscillateur à quartz qui détermine l'heure qu'il faut afficher. Le module permet de définir la position attendue du mouvement mécanique et donc la position angulaire du moteur qui entraîne le mouvement mécanique à chaque instant.

L'invention se rapporte encore à un système de détermination d'une erreur et de correction 40 de la position angulaire d'un moteur à rotation continue ayant une ou plusieurs phases, notamment un moteur de pièce d'horlogerie. Le système 40 est notamment configuré pour mettre en œuvre les procédés de détermination et de correction décrits précédemment. Représenté sur la figure 7, le système 40 comprend une unité de surveillance 41 des forces contre-électromotrices des phases du moteur. L'unité de surveillance 41 est reliée aux bobines d'un stator 42 du moteur, afin de surveiller les forces contre-électromotrices de chaque bobine. L'unité de surveillance 41 est en particulier configurée pour détecter chaque instant où la valeur des forces contre-électromotrices est nulle. Conformément au procédé de détermination, dès que l'une des forces contre-électromotrices passe par zéro, l'unité de surveillance 41 transmet un signal de détection. De préférence, l'unité de surveillance 41 détecte les changements du signe des forces contre-électromotrices pour déterminer si elle est passée par zéro.

Le système 40 comprend aussi une unité de traitement 43 configurée pour enregistrer un temps correspondant à chaque instant détecté par l'unité de surveillance 41, le signal de détection étant reçu par l'unité de traitement 43. L'unité de traitement 43 mesure ensuite plusieurs intervalles de temps entre deux instants détectés d'un même tour de moteur, de préférence entre tous les instants détectés du tour. L'unité de traitement 43 compare les intervalles de temps mesurés à des intervalles de temps de référence déterminés selon le procédé de détermination. Enfin, l'unité 43 déduit à quels intervalles de référence ils correspondent pour déterminer une erreur de mesure de la position angulaire si les intervalles mesurés ne correspondent pas à des intervalles de référence attendus. L'unité de traitement 43 est également configurée pour effectuer la série d'étapes préalables de définition des intervalles de référence selon le procédé décrit précédemment.

Le système comprend aussi une unité de correction 44 de la mesure de la position angulaire du moteur, l'unité de correction 44 étant reliée au moteur et à l'unité de traitement 43. L'unité de correction 44 est configurée pour compter le nombre d'instants détectés, et pour déduire une position angulaire du moteur. Comme cela est expliqué dans le procédé, en comptant le nombre d'instants détecté, on déduit la position angulaire depuis une position initiale.

Selon le procédé, l'unité de correction 44 est en outre configurée pour détecter une anomalie, et pour arrêter, puis redémarrer le moteur si une anomalie est détectée. Enfin, l'unité de correction 44 corrige la mesure de la position angulaire du moteur selon le procédé de correction. Pour cela, l'unité de traitement 43 transmet l'erreur de mesure de la position angulaire déterminée à l'unité de correction 44. Ainsi, s'il y a une erreur, l'unité de correction 44 corrige la mesure de la position angulaire du moteur.

L'invention se rapporte aussi à une pièce d'horlogerie selon la revendication 16, non représentée sur les figures, la pièce comprenant un boîtier à l'intérieur duquel est agencé un moteur à rotation continue ayant une ou plusieurs phases. Le moteur est configuré pour fournir de l'énergie mécanique à un mouvement horloger de la pièce d'horlogerie, notamment un mouvement mécanique d'un dispositif d'affichage à aiguilles. La pièce d'horlogerie comprend en outre un système de détermination d'une erreur et de correction de la mesure de la position angulaire du moteur tel que décrit précédemment.

## Revendications

1. Procédé de détermination (1) d'une erreur de mesure de la position angulaire d'un moteur à rotation continue ayant une ou plusieurs phases (11, 12, 13), notamment un moteur de pièce d'horlogerie, le moteur comprenant un rotor (42) mis en rotation, le procédé comprenant l'étape suivante consistant à :
- détecter (3) chaque instant (14) où la valeur d'une des forces contre-électromotrices est nulle, **caractérisé en ce que** le procédé comprend en plus les étapes suivantes consistant à :
- enregistrer (4) un temps correspondant à chaque instant détecté,
- mesurer (5) plusieurs intervalles de temps entre deux instants détectés (14) d'un même tour de moteur,
- comparer (6) les intervalles de temps mesurés à des intervalles de temps de référence pour déduire à quel intervalle de référence ils correspondent, et
- déterminer (7) une erreur de mesure de la position angulaire si les intervalles mesurés ne correspondent pas à des intervalles de référence attendus.

2. Procédé (1) selon la revendication 1, **caractérisé en ce que** l'on détermine (7) l'erreur de mesure de la position angulaire en comptant le nombre d'instants (14) d'avance ou de retard entre les intervalles mesurés et les intervalles de référence attendus.

3. Procédé (1) selon la revendication 1 ou 2, **caractérisé en ce que** les intervalles de temps sont mesurés entre deux instants (14) détectés successifs.

4. Procédé (1) selon l'une, quelconque, des revendications précédentes, **caractérisé en ce que** le même intervalle de temps est mesuré sur plusieurs tours de moteurs pour obtenir une valeur moyenne.

5. Procédé (1) selon l'une, quelconque, des revendications précédentes, **caractérisé en ce que** des intervalles de temps sont mesurés (5) entre tous les instants (14) détectés successifs d'un tour de moteur, pour obtenir une série d'intervalles de temps.

6. Procédé (1) selon la revendication 5, **caractérisé en ce que** la série d'intervalles de temps est comparée (6) à une série d'intervalles de temps de référence d'un tour de moteur de référence pour déterminer l'erreur de mesure.

7. Procédé (1) selon la revendication 6, **caractérisé en ce qu'**on détermine (7) l'erreur de mesure en comptant le nombre d'instants (14) d'avance ou de retard de la série d'intervalles de temps par rapport à la série d'intervalles de temps de référence.

8. Procédé (1) selon l'une, quelconque, des revendications précédentes, **caractérisé en ce qu'**il comprend une série d'étapes préalables de définition des intervalles de référence, le moteur tournant à vitesse constante, la série d'étapes consistant à :
- détecter (22) chaque instant (14) où la valeur d'une force contre-électromotrice est nulle,
- enregistrer (23) un temps correspondant à chaque instant détecté (14),
- mesurer (24) des intervalles de temps entre les instants détectés (14) successifs pour un tour de moteur, et
- enregistrer (25) les intervalles de temps mesurés comme des intervalles de référence pour un tour de référence du moteur.

9. Procédé selon la revendication 8, **caractérisé en ce qu'**on détecte (22) les instants (14) sur plusieurs tours du moteur afin de déterminer une valeur moyenne pour chaque intervalle de temps de référence du tour de référence.

10. Procédé selon la revendication 8 ou 9, **caractérisé en ce que** la série d'étapes préalables (22, 23, 24, 25) est répétée régulièrement pour actualiser les intervalles de référence.

11. Procédé (30) de correction de la mesure de la position angulaire d'un moteur à rotation continue ayant une ou plusieurs phases (11, 12, 13), notamment un moteur de pièce d'horlogerie, le moteur comprenant un rotor (42) mis en rotation, **caractérisé en ce qu'**il comprend les étapes suivantes :
- détecter (31) chaque instant (14) où la valeur d'une force contre-électromotrice est nulle,
- compter (32) le nombre d'instants (14) détectés pour déduire une position angulaire du moteur,
- effectuer (33) une série d'étapes préalables de définition d'intervalles de références selon l'une, quelconque, des revendications 8 à 10,
- détecter (34) une anomalie,
- déterminer (35) une erreur de mesure de la position angulaire du moteur avec le procédé de détermination selon l'une, quelconque, des revendications 1 à 7.
- corriger (37) la mesure de la position angulaire du moteur.

12. Procédé (30) selon la revendication 11, **caractérisé en ce que** le moteur est arrêté dès qu'une anomalie est détectée (34), puis il est redémarré avant de déterminer (35) une erreur de mesure de sa position angulaire.

13. Procédé (30) selon la revendication 11 ou 12, **caractérisé en ce qu'**une anomalie est détectée (34) lorsqu'on ne détecte plus d'instant ou lorsqu'un instant détecté ne vient pas d'une phase correspondant à un ordre prévu.

14. Système (40) de détermination d'une erreur et de correction de la mesure de la position angulaire d'un moteur à rotation continue ayant une ou plusieurs phases (11, 12, 13), notamment un moteur de pièce d'horlogerie, le moteur comprenant un rotor (42) apte à être mis en rotation, et le système comprenant :
- une unité de surveillance (41) des forces contre-électromotrices des phases du moteur, l'unité de surveillance (41) étant configurée pour détecter chaque instant où la valeur des forces contre-électromotrices est nulle,
**caractérisé en ce que** le système comprend :
- une unité de traitement (43) configurée pour enregistrer un temps correspondant à chaque instant détecté, pour mesurer plusieurs intervalles de temps entre deux instants détectés d'un même tour de moteur pour effectuer une série d'étapes préalables de définition d'intervalles de références, pour comparer les intervalles de temps mesurés à des intervalles de temps de référence d'un tour de référence du moteur afin de déduire à quel intervalle de référence ils correspondent, et pour déterminer une erreur de mesure de la position angulaire si les intervalles mesurés ne correspondent pas à des intervalles de référence attendus.

15. Système (40) selon la revendication 14, **caractérisé en ce qu'**il comprend une unité de correction de la mesure de la position angulaire, l'unité de correction étant configurée (44) pour compter le nombre d'instants (14) détectés afin de déduire une position angulaire du moteur, pour détecter une anomalie, et pour corriger (36) la mesure de la position angulaire du moteur.

16. Pièce d'horlogerie comprenant un moteur à rotation continue ayant une ou plusieurs phases (11, 12, 13), le moteur comprenant un rotor (42) apte à être mis en rotation pour fournir de l'énergie mécanique à un mouvement horloger, notamment un mouvement mécanique d'un dispositif d'affichage à aiguilles, et un système de détermination d'une erreur et de correction de la mesure (40) de la position angulaire du moteur selon la revendication 14 ou 15.

## Patentansprüche

1. Verfahren (1) zur Bestimmung eines Messfehlers der Winkelposition eines kontinuierlich drehenden Motors mit einer oder mehreren Phasen (11, 12, 13), insbesondere eines Motors einer Uhr, wobei der Motor einen drehenden Rotor (42) umfasst, und das Verfahren den folgenden Schritt umfasst, bestehend aus:
- Erfassen (3) eines jeden Zeitpunkts (14), bei dem der Wert einer der gegenelektromotorischen Kräfte gleich null ist, **dadurch gekennzeichnet, dass** das Verfahren ferner die folgenden Schritte umfasst, bestehend aus:
- Aufzeichnen (4) einer Zeit, die jedem erfassten Zeitpunkt entspricht,
- Messen (5) mehrerer Zeitintervalle zwischen zwei erfassten Zeitpunkten (14) in derselben Motorumdrehung,
- Vergleichen (6) der gemessenen Zeitintervalle mit Referenzzeitintervallen, um abzuleiten, welchem Referenzintervall sie entsprechen, und
- Bestimmen (7) eines Messfehlers der Winkelposition, falls die gemessenen Intervalle den erwarteten Referenzintervallen nicht entsprechen.

2. Verfahren (1) nach Anspruch 1, **dadurch gekennzeichnet, dass** der Messfehler der Winkelposition durch Zählen der Anzahl der Voreilungs- oder Nacheilungszeitpunkte (14) zwischen den gemessenen Intervallen und den erwarteten Referenzintervallen bestimmt (7) wird.

3. Verfahren (1) nach Anspruch 1 oder 2, **dadurch gekennzeichnet, dass** die Zeitintervalle zwischen zwei aufeinanderfolgenden erfassten Zeitpunkten (14) gemessen werden.

4. Verfahren (1) nach einem der vorhergehenden Ansprüche, **dadurch gekennzeichnet, dass** dasselbe Zeitintervall über mehrere Motorumdrehungen gemessen wird, um einen Mittelwert zu erhalten.

5. Verfahren (1) nach einem der vorhergehenden Ansprüche, **dadurch gekennzeichnet, dass** die Zeitintervalle zwischen allen aufeinanderfolgenden erfassten Zeitpunkten (14) einer Motorumdrehung gemessen (5) werden, um eine Reihe von Zeitintervallen zu erhalten.

6. Verfahren (1) nach Anspruch 5, **dadurch gekennzeichnet, dass** die Reihe von Zeitintervallen mit einer Reihe von Referenzzeitintervallen einer Referenz-Motorumdrehung verglichen (6) wird, um den Messfehler zu bestimmen.

7. Verfahren (1) nach Anspruch 6, **dadurch gekennzeichnet, dass** der Messfehler durch Zählen der Anzahl von Voreilungs- oder Nacheilungszeitpunkten (14) der Reihe von Zeitintervallen in Bezug auf die Reihe von Referenzzeitintervallen bestimmt (7) wird.

8. Verfahren (1) nach einem der vorhergehenden Ansprüche, **dadurch gekennzeichnet, dass** es eine Reihe vorhergehender Schritte für die Definition der Referenzintervalle umfasst, wobei sich der Motor mit konstanter Drehzahl dreht, wobei die Reihe von Schritten besteht aus:
- Erfassen (22) eines jeden Zeitpunkts (14), bei dem der Wert einer gegenelektromotorischen Kraft gleich null ist,
- Aufzeichnen (23) einer Zeit, die jedem erfassten Zeitpunkt (14) entspricht,
- Messen (24) der Zeitintervalle zwischen den aufeinanderfolgenden erfassten Zeitpunkten (14) für eine Motorumdrehung und
- Aufzeichnen (25) der gemessenen Zeitintervalle als die Referenzintervalle für eine Referenzmotorumdrehung.

9. Verfahren nach Anspruch 8, **dadurch gekennzeichnet, dass** die Zeitpunkte (14) über mehrere Motorumdrehungen erfasst (22) werden, um einen Mittelwert für jedes Referenzzeitintervall der Referenzumdrehung zu bestimmen.

10. Verfahren nach Anspruch 8 oder 9, **dadurch gekennzeichnet, dass** die Reihe vorhergehender Schritte (22, 23, 24, 25) regelmäßig wiederholt wird, um die Referenzintervalle zu aktualisieren.

11. Verfahren (30) zur Korrektur der Messung der Winkelposition eines kontinuierlich drehenden Motors mit einer oder mehreren Phasen (11, 12, 13), insbesondere eines Motors einer Uhr, wobei der Motor einen drehenden Rotor (42) umfasst, **dadurch gekennzeichnet, dass** es die folgenden Schritte umfasst:
- Erfassen (31) eines jeden Zeitpunkts (14), bei dem der Wert einer gegenelektromotorischen Kraft gleich null ist,
- Zählen (32) der Anzahl erfasster Zeitpunkte (14), um eine Winkelposition des Motors abzuleiten,
- Ausführen (33) einer Reihe vorhergehender Schritte für die Definition von Referenzintervallen nach einem der Ansprüche 8 bis 10,
- Erfassen (34) einer Anomalie,
- Bestimmen (35) eines Messfehlers der Winkelposition des Motors mit dem Bestimmungsverfahren nach einem der Ansprüche 1 bis 7,
- Korrigieren (37) der Messung der Winkelposition des Motors.

12. Verfahren (30) nach Anspruch 11, **dadurch gekennzeichnet, dass** der Motor angehalten wird, sobald eine Anomalie erfasst (34) wird, woraufhin er erneut gestartet wird, bevor ein Messfehler seiner Winkelposition bestimmt (35) wird.

13. Verfahren (30) nach Anspruch 11 oder 12, **dadurch gekennzeichnet, dass** eine Anomalie erfasst (34) wird, wenn kein Zeitpunkt mehr erfasst wird oder wenn ein erfasster Zeitpunkt nicht aus einer Phase stammt, die einer vorgesehenen Reihenfolge entspricht.

14. System (40) zur Bestimmung eines Fehlers und zur Korrektur der Messung der Winkelposition eines kontinuierlich drehenden Motors mit einer oder mehreren Phasen (11, 12, 13), insbesondere eines Motors einer Uhr, wobei der Motor einen Rotor (42) umfasst, der drehbar ist, und das System umfasst:
- eine Einheit (41) zum Überwachen gegenelektromotorischer Kräfte der Phasen des Motors, wobei die Überwachungseinheit (41) konfiguriert ist, um jeden Zeitpunkt zu erfassen, bei dem der Wert der gegenelektromotorischen Kräfte gleich null ist,
**dadurch gekennzeichnet, dass** das System umfasst:
- eine Verarbeitungseinheit (43), die konfiguriert ist, um eine Zeit aufzuzeichnen, die jedem erfassten Zeitpunkt entspricht, um mehrere Zeitintervalle zwischen zwei erfassten Zeitpunkten derselben Motorumdrehung zu messen, um eine Reihe vorhergehender Schritte für die Definition von Referenzzeitintervallen auszuführen, um die gemessenen Zeitintervalle mit Referenzzeitintervallen einer Referenzmotorumdrehung zu vergleichen, um abzuleiten, welchem Referenzintervall sie entsprechen, und um einen Messfehler der Winkelposition zu bestimmen, falls die gemessenen Intervalle erwarteten Referenzintervallen nicht entsprechen.

15. System (40) nach Anspruch 14, **dadurch gekennzeichnet, dass** es eine Einheit zur Korrektur der Messung der Winkelposition umfasst, wobei die Korrektureinheit konfiguriert (44) ist, um die Anzahl erfasster Zeitpunkte (14) zu zählen, um eine Winkelposition des Motors abzuleiten, um eine Anomalie zu erfassen und um die Messung der Winkelposition des Motors zu korrigieren (36).

16. Uhr, umfassend einen kontinuierlich drehenden Motor mit einer oder mehreren Phasen (11, 12, 13), wobei der Motor einen Rotor (42) aufweist, der drehbar ist, um mechanische Energie für ein Uhrwerk, insbesondere für ein mechanisches Uhrwerk einer Anzeigevorrichtung mit Zeigern zu liefern, und ein System zur Bestimmung eines Fehlers und zur Korrektur der Messung (40) der Winkelposition des Motors nach Anspruch 14 oder 15.

## Claims

1. Method for determining (1) an error in the measurement of the angular position of a continuous rotation motor having one or more phases (11, 12, 13), particularly a timepiece motor, the motor comprising a rotating rotor (42), the method comprising the following step consisting in:
- detecting (3) each instant (14) when the value of one of the back electromotive forces is zero, **characterized in that** the method further comprises the following steps consisting in :
- storing (4) a time corresponding to each detected instant,
- measuring (5) several time intervals between two instants (14) detected in the same revolution of the motor,
- comparing (6) the measured time intervals to reference time intervals to deduce the reference intervals to which they correspond, and
- determining (7) an angular position measurement error if the measured intervals do not correspond to the expected reference intervals.

2. Method (1) according to claim 1, **characterized in that** the angular position measurement error is determined (7) by counting the number of instants (14) of advance or lag between the measured intervals and the expected reference intervals.

3. Method (1) according to claim 1 or 2, **characterized in that** the time intervals are measured between two successive detected instants (14).

4. Method (1) according to any of the preceding claims, **characterized in that** the same time interval is measured over several revolutions of the motor to obtain a mean value.

5. Method (1) according to any of the preceding claims, **characterized in that** time intervals are measured (5) between all the instants (14) detected in one revolution of the motor, to obtain a series of time intervals.

6. Method (1) according to clam 5, **characterized in that** the series of time intervals is compared (6) to a series of reference time intervals of one reference revolution of the motor to determine the measurement error.

7. Method (1) according to claim 6, **characterized in that** the measurement error is determined (7) by counting the number of instants (14) of advance or lag of the series of time intervals compared to the series of reference time intervals.

8. Method (1) according to any of the preceding claims, **characterized in that** the method includes a series of preliminary steps of defining the reference intervals, wherein the motor rotates at constant speed and the series of steps consists in:
- detecting (22) each instant (14) when the value of a back electromotive force is zero,
- storing (23) a time corresponding to each detected instant (14),
- measuring (24) time intervals between the successive detected instants (14) for one revolution of the motor, and
- storing (25) the measured time intervals as reference intervals for a reference revolution of the motor.

9. Method (1) according to claim 8, **characterized in that** the instants (14) are detected (22) over several revolutions of the motor in order to determine a mean value for each reference time interval of the reference revolution.

10. Method according to claim 8 or 9, **characterized in that** the series of preliminary steps (22, 23, 24, 25) is regularly repeated to update the reference intervals.

11. Method (30) for correcting the measurement of the angular position of a continuous rotation motor having one or more phases (11, 12, 13), particularly a timepiece motor, the motor comprising a rotating rotor (42), **characterized in that** the method includes the following steps:
- detecting (31) each instant (14) when the value of a back electromotive force is zero,
- counting (32) the number of detected instants (14) to deduce an angular position of the motor,
- performing (33) a series of preliminary steps of defining reference intervals according to any of claims 8 to 10,
- detecting (34) an anomaly,
- determining (35) an error in the angular position measurement of the motor with the determination method according to any of claims 1 to 7,
- correcting (37) the angular position measurement of the motor.

12. Method (30) according to claim 11, **characterized in that** the motor is stopped as soon as an anomaly is detected (34) and then restarted before determining (35) an angular position measurement error.

13. Method (30) according to claim 11 or 12, **characterized in that** an anomaly is detected (34) when no more instants are detected, or when a detected instant does not come from a phase corresponding to an expected order.

14. System (40) for determining an error and correcting the angular position measurement of a continuous rotation motor having one or more phases (11, 12, 13), particularly a timepiece motor, the motor comprising a rotating rotor (42), and the system including :
- a unit (41) for monitoring the back electromotive forces of the phases of the motor, the monitoring unit (41) being configured to detect each phase when the value of the back electromotive forces is zero, **characterized in that** the system includes :
- a processing unit (43) configured to store a time corresponding to each detected instant, to measure several time intervals between two instants detected in the same revolution of the motor, to perform a series of preliminary steps of defining reference intervals, to compare the measured time intervals to reference time intervals in a reference revolution of the motor in order to deduce to which reference interval they correspond, and to determine an angular position measurement error if the measured intervals do not correspond to the expected reference intervals.

15. System (40) according to claim 14, **characterized in that** the system comprises a unit for correcting the angular position measurement, the correction unit being configured (44) to count the number of detected instants (14) and deduce an angular position of the motor, to detect an anomaly, and to correct (36) the angular position measurement of the motor.

16. Timepiece comprising a continuous rotation motor having one or more phases (11, 12, 13), the motor comprising a rotor (42) capable of rotation to supply mechanical energy to a timepiece movement, in particular a mechanical movement of a display device with hands, and a system (40) for determining an error and correcting the angular position measurement of the motor according to claim 14 or 15.
